# EUROPEAN PATENT SPECIFICATION

(11) **EP 4 032 380 B1**
(45) Date of publication and mention of the grant of the patent: **09.09.2026**
(21) Application number: 22150902.9
(22) Date of filing: 11.01.2022
(51) Int. Cl.: A01B 73/04, A01B 59/06, A01B 63/114, A01C 23/02, A01C 23/00, A01C 7/20

(54) **MOUNTING FOR AN AGRICULTURAL TOOL, AGRICULTURAL TOOL PROVIDED WITH SUCH A MOUNTING, AND METHOD FOR USE OF SAME**
HALTERUNG FÜR EIN LANDWIRTSCHAFTLICHES WERKZEUG, LANDWIRTSCHAFTLICHES WERKZEUG MIT EINER SOLCHEN HALTERUNG UND VERFAHREN ZU DESSEN VERWENDUNG
MONTAGE POUR UN OUTIL AGRICOLE, OUTIL AGRICOLE MUNI D'UN TEL MONTAGE ET SON PROCÉDÉ D'UTILISATION

(30) Priority: 22.01.2021 DE 102021101391
(43) Date of publication of application: 27.07.2022
(73) Proprietor: Bomech B.V., 7665 SH Albergen (NL)
(72) Inventor: Schurink, Gerard Johannes, 7665 SH Albergen (NL); Hoek, Johannes Bernardus Maria, 7665 SH Albergen (NL)
(74) Representative: Patentwerk B.V.

(56) References cited:
- EP-B1- 2 883 434
- WO-A1-2021/078802
- FR-A1- 3 085 101
- US-B2- 10 517 202

## Description

The present invention concerns a mounting for an agricultural tool, having a carrier frame provided with coupling means for coupling the carrier frame to a vehicle, a tool frame, and a linkage mechanism via which the tool frame is movably connected to the carrier frame.

Agricultural tools must often be coupled to a vehicle, in particular to agricultural vehicles designed for this, such as tractors, wherein the tool may be used for working the soil. Working the soil may mean for example sowing, distributing liquid fertiliser, spreading pesticides, scarifying, ploughing, harrowing, digging etc. In performing many such tasks, it is desirable for the agricultural tool to follow the ground surface as closely as possible, wherein the orientation and positioning of the agricultural tool may be adapted to local unevenness in the ground surface relative to the vehicle towing the agricultural tool. In agricultural tools known from the prior art, this is only possible within limitations. Here, the freedom of movement of the agricultural tool is often considerably restricted by the fixing of the agricultural tool to the vehicle, whereby it is not possible to precisely follow the ground contour. An example of an agricultural tool according to the prior art is shown in EP2883434, US1057202, FR3085101. Another example is shown in EP4048053, which was filed before and published after the present document. All of these documents disclose an agricultural tool wherein a tool frame is movably connected to an agricultural vehicle.

It is therefore the aim of the present invention to provide an improved mounting for an agricultural tool so that this allows better following of the ground surface.

The present invention to this end creates a mounting for agricultural tool according to the appended claims. Here, the primary connecting rods may be arranged above or below the at least one stabilising element as required.

By mounting an agricultural tool on a tool frame which is coupled via such a mounting to the carrier frame, which carrier frame can then be coupled to an agricultural vehicle, the tool frame is better able to follow the ground level. An agricultural tool in this context means at least a frame with several soil-working elements, such as outlet nozzles for applying liquid fertiliser into or onto the ground. The soil-working elements may however for example also comprise drag legs, drag hoses, coulter discs, plough elements, or other elements for which close following of the ground level is desirable. Since the agricultural tool follows a same motion as the tool frame, the remainder of the application refers to the tool frame, which also means an agricultural tool mounted thereon. A tool frame also means a plurality of smaller tool frames which are each connected to the carrier frame by a linkage mechanism according to the invention. These several tool frames are preferably placed parallel to one another. The several parallel tool frames thus together form a larger tool frame. Each of these smaller tool frames may be provided with a number of soil-working elements. By using several small parallel tool frames, the load on the linkage mechanism can be limited because of the lower weight. Although the present invention refers to a carrier frame, the present invention also means that the mounting, in particular the linkage mechanism, is directly rotatably connected to the agricultural vehicle. By means of said linkage mechanism, it is possible to give the tool frame (and hence an agricultural tool mounted thereon) a greater freedom of movement than tool frames of the prior art. The movement of the tool frame is largely completely free because of the linkage mechanism. The great degree of freedom of movement of the tool frame with a mounting according to the present invention is, inter alia, a result of an independent mounting system. This means that each of the primary connecting rods is independently and individually connected to the carrier frame so as to be independently rotatable. The primary connecting rods are rotatably connected to the carrier frame by a first connection. Many relative positionings between the two primary rods are thus possible. Thus for example, a first of the two primary arms may be swivelled away from the ground while the other primary arm is swivelled towards the ground. In addition, it is also possible that the first and/or second primary arms are turned inward or outward.

Because the secondary connecting rods are coupled to the primary connecting rods so as to be rotatable about a second connection, these secondary arms are also movable individually and mutually independently.

The freedom of movement obtained by the primary and secondary arms may be described as follows. The primary connecting rods, from the connection to the carrier frame, can move freely within a conical area. This conical area is limited by the maximum rotation of the primary arm about the first connection in both the horizontal and the vertical plane. The base plane of the conical area may assume a circular form, but it is also conceivable that the primary arms can move further in the vertical direction, whereby the base plane is elliptical. The primary arms may assume any position within the space enclosed by this cone.

The secondary connecting rods are connected to the primary connecting rods so as to be rotatable about the second connection. Because the secondary arms can move freely relative to the primary arms, then the former have a further freedom of movement in addition to the freedom of movement of the primary arm. The secondary arms, from the second connection to the primary arms, can move freely within a similar conical area. Because the primary and secondary arms are also freely movable relative to one another, a secondary arm may assume even more positions, depending on the position of the primary arm. The secondary arms thus have an even greater range of movement and a greater range of positions relative to the carrier frame.

Preferably, the primary and secondary connecting rods at the first and second connection are thus each rotatable about a first horizontal rotational axis, which extends substantially perpendicularly to a direction of travel of the vehicle, and a second horizontal rotational axis, which extends substantially parallel to a direction of travel of the vehicle. Preferably, the possibility of rotation about the first horizontal axis is greater than that about the second horizontal axis.

The tool frame is rotatably connected to the secondary arm by means of a third connection situated at a distance from the second connection. In this way, these third connections, which attach the tool frame to the secondary arms, can move freely within an area which is formed by the cumulative sum of the movement spaces of the primary and secondary connecting rods. Within the limits of this area, the tool frame can translate and rotate freely. These translations and rotations are induced for example by unevenness in the ground. It is conceivable that the vehicle to which the agricultural tool is coupled stands on substantially flat ground, while the tool frame (which is situated at some distance behind the vehicle) still stands on or above a sloping or uneven piece of ground. At a first end of the tool frame, the ground presses against the soil-working elements. At a second end remote from the first end, the tool frame sags just to the ground until the tool frame is supported on the ground. Thus a rotation of the tool frame occurs about an axis parallel to the direction of travel of the vehicle. This rotation can be achieved substantially completely exclusively by the contact between the ground and the tool frame, because the tool frame is freely movable. Because the two connecting arms are situated at a distance from one another and are individually and independently movable, a greater angular twist can be achieved. In addition, the arms are movable within a conical area and are therefore not restricted to a rotation in one plane. To prevent the mounting from being slack, a stabilising element is attached. This stabilising element is rotatably connected to the primary and/or secondary connecting rods and to a part of the tool frame located at a distance from the third connection. This may prevent the mounting from collapsing, and the tool frame encloses a predefined angle with the ground.

In an alternative embodiment variant, at least one stabilising element is adjustable in length for setting an angle of the tool frame relative to the carrier frame. By making the at least one stabilising element adjustable in length, an angle of the tool frame relative to the carrier frame can be set. It is noted here that the angle of the tool frame relative to the carrier frame depends on the angle of the tool frame with the ground, but by controlling the angle of the tool frame relative to the carrier frame, the angle of the tool frame to the ground is also controlled. It is however also possible that the angle of the tool frame relative to the ground can be set by means of the stabilising element. This gives the tool frame according to the present invention more adjustment possibilities compared with the known tool frames. Also, adjusting the length of the cylinder allows working with greater precision, and the tool frame can be set as preferred.

In an alternative embodiment variant, the length of the at least one stabilising element is adjustable by means of an adjustable cylinder. This cylinder is rotatably connected to the primary and/or secondary connecting arm, and to a part of tool frame located at a distance from the second rotational axis. In this way, this cylinder can control an orientation of the tool frame relative to the carrier frame and the ground without affecting the tool frame's following of the ground. In general, preferably the connection between the primary and secondary connecting rods coincides with one of the two connections of the stabilising element. This means that the stabilising element is also rotatable about the second connection, since that is where the secondary arm is connected to the primary arm. The other end of the stabilising element then acts on the tool frame at a distance from third connection.

Preferably, the tool frame can be placed by the at least one stabilising element in a working position, in which position the tool frame is movable relative to the carrier frame, and also in a transport position, in which position at least one rotation of the tool frame relative to the carrier frame is inhibited. In the working position, the tool frame can precisely follow irregularities in the ground, as already described above. In the transport position, the stabilising element is positioned such that it presses the tool frame into a position in which the free movement of the tool frame is substantially completely absent. In this position, the tool frame is preferably clear of the ground, in other words placed at a specific height. It is also possible that the soil-working elements, such as the fertiliser output nozzles, are at least partially turned away from the ground so that fertiliser is not undesirably discharged from the output nozzles in the transport position.

In an alternative embodiment variant, the length of the at least one stabilising element in the working position is controllable for maintaining a substantially constant angle of the tool frame relative to the carrier frame. In this way for example, the angle which the fertiliser output nozzles make with the ground can be kept substantially constant. Thus even when the vehicle with tool frame mounted at its rear travels over more irregular ground, an angle between the tool frame - in particular the soil-working elements - and the ground can be set. It is advantageous to keep this angle constant, so that for example the output of liquid fertiliser is constant over the entire working width of the tool frame. Or in the case that the soil-working elements are for example hooks which plough the soil, the ground is ploughed evenly over the entire working width. Here, the stabilising element may be controlled actively or reactively.

In yet another embodiment variant, in the transport position, a part of the tool frame rests on at least one of the connecting rods such that the rotation of the tool frame is inhibited or prevented. In the transport position, which can also be described as the blocked position, it is desirable that the tool frame no longer rotates. By setting or adjusting at least one stabilising element, the tool frame may effectively be placed in a forced position. This position is distinguished in that the free rotation of the linkage mechanism has been eliminated. It is conceivable that for this, one of the rods, in particular the rod against which the tool frame rests, is provided with a buffer block. A buffer block may for example be a block which is made of HDPE or another shock-absorbing material. This buffer block may prevent excessive wear on the connecting rods.

Preferably, the linkage mechanism is also provided with at least two tertiary connecting rods, wherein the tertiary connecting rods are each individually and independently connected to the carrier frame so as to be rotatable about a fourth connection, and individually and independently rotatably connected to the secondary connecting rods. Preferably, but not necessarily, the tertiary connecting rods are connected to the secondary connecting rods so as to be rotatable about the third connection. Thus a parallelogram is formed between the first, second, third and fourth connections, wherein the primary, secondary and tertiary arms form a parallel mounting. By implementation of the tertiary rods, the linkage mechanism may be given more stability and it is thereby possible to carry a greater load. This makes the mounting more suitable for large agricultural tools which are attached to the tool frame.

In an alternative embodiment variant, the tool frame in the transport position in particular rests on at least one tertiary connecting rod. For this for example, the tool frame may be provided with a locally protruding part which can press against the tertiary connecting rod if desired. In the transport position, the soil-working elements of the agricultural tool coupled to the mounting then preferably stand at a predefined height and enclose a predefined angle with the ground. This height and angle are determined by the protruding part. By placing the protruding part thus on the tool frame, the correct transport position is assumed when the stabilising element is set to the maximum length.

In the transport position, a movement damper damps the relative movement of at least two connecting rods of the linkage mechanism. This is advantageous if a large and heavy agricultural tool is coupled. Damping of the tool frame means damping in one or more vertical or rotational directions such that a movement damper damps the relative movements of two connecting rods of the linkage mechanism. Thus the chance of a part unexpectedly breaking due to a peak load during transport or in the blocked position is lower. A peak load may occur in the transport position for example when the vehicle is travelling over bumpy ground. If the linkage mechanism is not damped, then because the tool frame and agricultural tool are carried directly by the mounting, a peak in the load may occur during travelling over the bumps. These movement dampers may be arranged in at least two locations. The first possibility is the second connection at which the primary and secondary rods are coupled. By damping one angle, and preferably the rods which are attached at this connection point, the entire mechanism is thus damped. The second possibility is the third connection, in particular the rods attached to this. If this connection is damped, the vehicle frame, in particular the possibility of rotation about the third connection, is damped.

In an alternative embodiment variant, the rotatable connection of the at least one stabilising element to the primary and/or secondary arms in particular coincides with the second connection. This makes the construction simpler because fewer separate rotatable connections need be created. Also, from this point, the tool frame can be moved well by the stabilising element if this is adjustable in length. It is however also conceivable that the stabilising element is placed at another location. It is generally important that at least one stabilising element is placed on the moving part of the structure, i.e. on the linkage mechanism or on the tool frame.

Preferably, at least three of the first, second, third and fourth connections are ball joints. By forming at least three of the connections as ball joints, the mounting, as well as rotating in the vertical plane, can also rotate about a vertical axis. Preferably, in each case the first and fourth connections consist of ball joints, so that the mounting - and hence also the tool frame and the agricultural tool - can rotate about a vertical axis which extends through the first and fourth connections. This rotational freedom makes the agricultural tool, connected by means of the mounting, better able to follow the ground. This is because it allows not only rotation of the linkage mechanism in the vertical plane but also a degree of relative difference in rotation. This difference in the extent of rotation establishes the difference in the angle which the two primary connecting rods make with the carrier frame. If the difference in the extent of rotation is too great, the tool frame can rub on (lie across) the linkage mechanism. By making three connections as ball joints, the entire assembly can also rotate to a certain extent, whereby friction on the tool frame can be reduced.

In an alternative embodiment variant, the length of the two primary and two tertiary connecting rods is substantially equal, which means that these may only have a very slight difference in length of maximum a few centimetres. Alternatively however, it is also possible that the lengths may be different. With a substantially equal length, the linkage mechanism forms a parallelogram, whereby the forces of the tool frame and the agricultural tool coupled thereto are better transmitted. It is conceivable that both the primary and secondary arms are provided with adjustment means in order to ensure that the tool frame is positioned in the desired fashion. Correct here means that the tool frame lies substantially horizontally if the vehicle is standing on a horizontal piece of ground. These adjustment means may prevent the agricultural tool from standing obliquely, and all stresses from sitting in the mounting in advance.

The present invention also concerns an agricultural tool provided with a mounting as described above, wherein the agricultural tool is removably coupled to the tool frame. The invention furthermore concerns a method for freely mounting an agricultural tool, comprising the steps of a) procuring a mounting according to the invention, b) coupling the primary connecting rods to a vehicle or carrier frame which is connected to a vehicle, and c) coupling the tool frame to the third connections and to the at least one stabilising element. The agricultural vehicle and the method have the same advantages as the above-mentioned advantages of the mounting according to the present invention, so here, by means of reference, these are also included in relation to the agricultural vehicle and method according to the present invention.

The present invention will be further clarified by means of the following non-limitative exemplary embodiments. In the drawings:
- figure 1 shows a side view of part of the mounting;
- figure 2 shows a perspective illustration of the mounting in a working position;
- figure 3 shows the same mounting as in figure 2, in a transport position;
- figures 4a-4d show, schematically, different possible positions of the mounting and the coupled agricultural vehicle; and
- figurer 5 shows a schematic top view of an alternative embodiment of the tool frame.

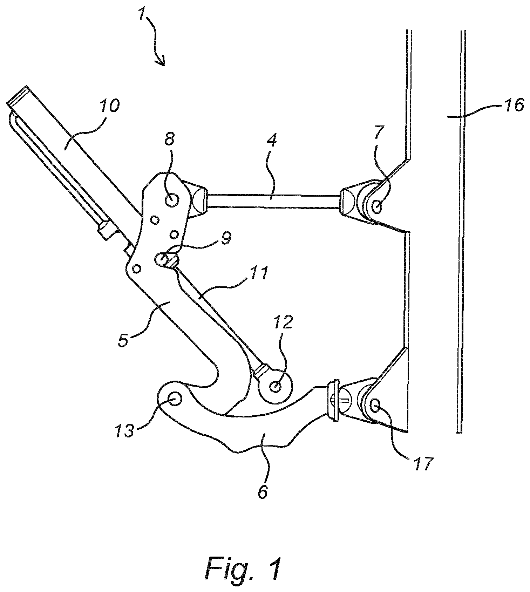

Figure 1 shows, for illustrative reasons, only the linkage mechanism of the mounting 1 and the carrier frame 16. In this embodiment variant, the linkage mechanism is formed by three rods 4, 5, 6. A primary connecting rod 4 is rotatably connected at a first connection 7. In this embodiment, this first connection 7 sits on the carrier frame 16, which carrier frame 16 is coupled to a vehicle. It is however also possible to connect the first connection 7 directly to the vehicle. The other end of the first arm 4 is rotatably connected to a secondary arm 5, such that these act on a second connection 8 rotatably relative to one another. In this embodiment variant, a tertiary connecting rod 6 is situated below the first arm 4, which rod is firstly rotatably connected to a third connection 13 and secondly connected to the carrier frame 16 so as to be rotatable about a fourth connection 7. Although, in this figure, the tertiary arm 6 is situated below the primary arm 4, a reverse of this orientation also falls under the protection of the present invention. In this embodiment variant, the third connection 13 is formed by a rotational axis around which the secondary arm 5 and tertiary arms 6 can rotate independently of one another. In this illustration, a stabilising element is formed by a cylinder 10, wherein the cylinder is adjustable in length by means of an extendable part 11. The length-adjustable part 11 is connected by means of a coupling 12 to the tool frame (not visible in this figure). The cylinder 10 of the stabilising element is connected to the second arm 5 so as to be rotatable about a rotational axis 9. Thus the cylinder 10 is situated completely in the moving part of the mounting 1. In this figure, only one mounting 1 is shown; in most cases, however, the agricultural tool is coupled to at least two of these mountings 1 which are both movable individually and independently of one another. In the case that the entire tool frame consists of several parallel smaller tool frames, it is possible that each of the smaller frames is coupled by means of only one mounting 1.

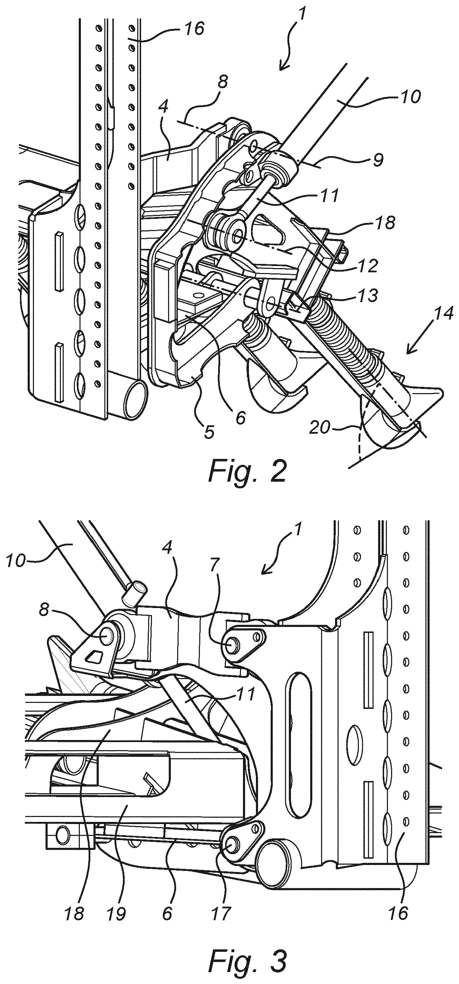

In figure 2, the linkage mechanism shown in figure 1 is shown together with the other components. The figure shows a cross-section in a vertical plane from the carrier frame 16. The connection between the carrier frame 16 and the primary arms 4 of the mounting 1 is not visible in this figure. The cross-section also shows the inside of the cylinder 10, wherein it can be seen that the adjustable part 11 is only partially used. The position shown in this figure is the working position of the mounting 1. In this position, the tool frame 18 is freely movable. By extending the adjustable part 11 of the stabilising element further out of the cylinder, the tool frame 18 can be forced about a rotational axis 13. This rotation causes the soil-working elements 14 to stand at a small angle 20 to the ground. By retracting the adjustable part further into the cylinder, the opposite effect is achieved. In this way, by accurate control of the cylinder, a constant angle 20 of the tool frame 18 (or the soil-working elements of the agricultural tool coupled thereto) can be maintained. In this working position, the linkage mechanism can move freely because the primary arm 4 is coupled by means of the second connection 8 to the secondary arm 5, which in turn is coupled by means of the third connection 13 to the tertiary arm 6, forming a parallelogram. This parallelogram is freely movable in a vertical plane parallel to this cross-section.

Figure 3 again shows the same mounting 1 as in figure 2. Here the mounting 1 is placed in the transport position. A part 19 of the tool frame 18 is forced against an arm, in particular the tertiary arm 6, of the mounting 1. This is achieved by means of the length-adjustable stabilising element, wherein the adjustable part 11 is extended almost completely out of the cylinder 10. Because this movable part 11 is connected to the tool frame 18, a rotation about the third connection (where the tool frame 18 is attached to the secondary arm 5) is set in motion. The part 19 of the tool frame 18 is thus positioned such that, at a specific distance from the adjustable part 11 of the cylinder 10, it runs up against the tertiary arm 6. As soon as this runs up against the tertiary arm 6, the tool frame 18 is turned at least partially away from the ground. When the part 19 of the tool frame 18 runs up against the tertiary arm 6, the mounting 1 is no longer freely movable. This is advantageous during transport because the tool frame is thus secured.

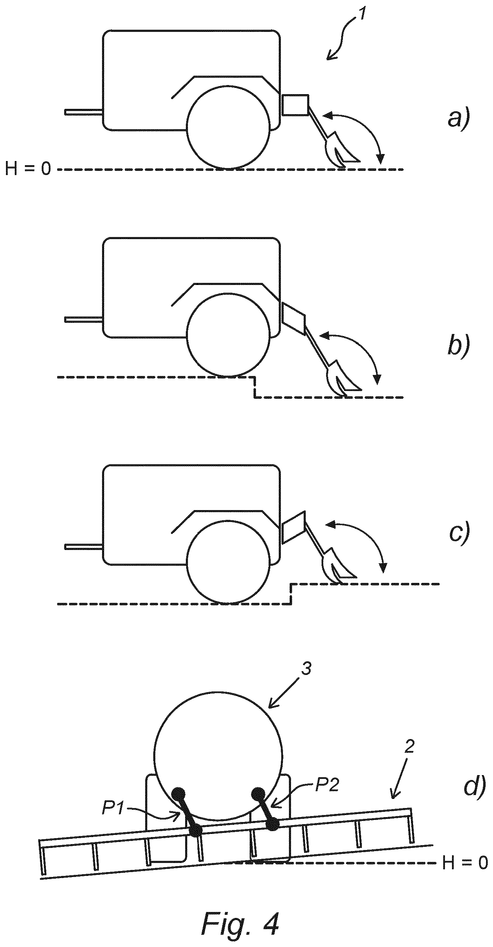

Figures 4a-4d show four examples of possible states of the mounting 1. In this example, the mounting 1 is placed behind a vehicle 3 comprising a slurry tank which can be coupled to a tractor. Figure 4a shows an initial position in which the vehicle 3 and the agricultural tool 2 are both situated on the same level. The angle which the agricultural tool 2 encloses with the ground is shown. Figure 4b shows the situation in which the vehicle is situated on a piece of ground located slightly higher than the agricultural tool 2, wherein the mounting 1 enables the agricultural tool 2 to drop relative to the vehicle 3, and the stabilising element (not shown) still allows the same angle of the agricultural tool 2 to the ground to be achieved, whereby the soil can be worked at the same angle in both figures 4a and 4b. Figure 4c shows the situation in which the vehicle 3 is on a lower piece of ground than the agricultural tool 2. In this case, the parallelogram 1 is rotated upward so as to compensate for the height difference and retain the same angle between the agricultural tool 2 and the ground. Figure 4d shows the vehicle 3 from the rear. The vehicle 3 is here standing on a horizontal piece of land, while the agricultural tool 2 mounted at the rear by means of the mounting 1 is still on a sloping piece of ground. It is clear to see here how, by means of the first parallelogram P1 and the second parallelogram P2, the mounting 1 allows a rotation of the agricultural tool 2 so that it follows the ground. Here, the left parallelogram P1 is in the position shown in figure 4b, and the right parallelogram P2 is in the position shown in figure 4c. In addition to this relative orientation of the parallelograms P1 and P2, the parallelograms P1 and P2 can also rotate, as shown in this figure. This prevents the agricultural tool 2 from rubbing on the mountings P1 and P2.

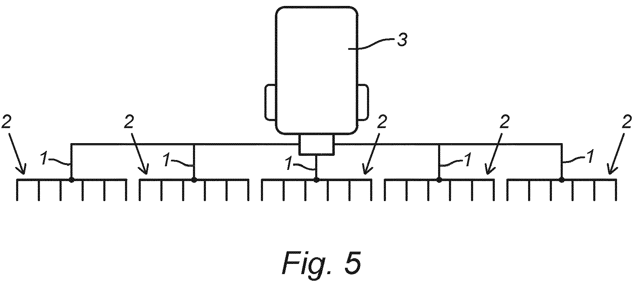

Figure 5 shows an alternative embodiment of the tool frame 2. In this figure, the tool frame 2 is constructed from a multiplicity of small parallel tool frames 2. These small tool frames 2 each have a small number of soil-working elements, whereby the weight of each of these frames 2 can be kept relatively low. This is advantageous since each of these tool frames 2 is connected to the carrier frame by means of a linkage mechanism 1 according to the invention (indicated schematically), wherein the carrier frame is coupled to the vehicle 3. This configuration of the tool frame 2 reduces the load on the linkage mechanism because of the lower weight. Although the figure shows that the entire tool frame is constructed from five individual and parallel tool frames 2, the invention is not exclusively restricted to this number and it should be noted that any arbitrary number of parallel tool frames 2 is possible.

## Claims

1. Mounting (1) for an agricultural tool, comprising:
- a carrier frame (16) provided with coupling means for coupling the carrier frame (16) to a vehicle (3);
- a tool frame (2, 18);
- a linkage mechanism via which the tool frame (2, 18) is movably connected to the carrier frame (16), said linkage mechanism being provided with:
- at least two primary connecting rods (4) spaced apart from one another, wherein the primary connecting rods (4):
- are each individually and independently connected to the carrier frame (16) so as to be independently rotatable about a first connection (7), and
- at least two secondary connecting rods (5), wherein the secondary connecting rods (5):
- act rotatably on the tool frame (2, 18) by means of a third connection (13) located at a distance from the second connection (8), and
- at least one stabilising element (10) which is rotatably connected:
- to the primary (4) and/or secondary (5) connecting rods, and
- to a part (12) of the tool frame (2, 18) located at a distance from the third connection (13)
**characterised in that**
the secondary connecting rods (5) are each individually and independently connected to the primary connecting rods (4) so as to be individually and mutually independently rotatable about a second connection (8).

2. Mounting (1) according to Claim 1, wherein at least one stabilising element (10) is adjustable in length for setting an angle (20) of the tool frame (2, 18) relative to the carrier frame (16).

3. Mounting (1) according to Claim 2, wherein the length of the at least one stabilising element (10) is adjustable by means of an adjustable cylinder (10, 11).

4. Mounting (1) according to one of Claims 2 or 3, wherein the tool frame can be placed by the at least one stabilising element (10) in:
- a working position, in which position the tool frame (2, 18) is movable relative to the carrier frame (16),
- a transport position, in which position at least one rotation of the tool frame (2, 18) relative to the carrier frame (16) is inhibited.

5. Mounting (1) according to Claim 4, wherein the length of the at least one stabilising element (10, 11) in the working position is controllable for maintaining a substantially constant angle (20) of the tool frame (2, 18) relative to the carrier frame (16).

6. Mounting (1) according to Claim 4, wherein in the transport position, a part (19) of the tool frame (2, 18) rests on at least one of the connecting rods such that rotation of the tool frame (2, 18) is inhibited or prevented.

7. Mounting (1) according to any of the preceding claims, wherein the linkage mechanism is also provided with:
- at least one tertiary connecting rod (6), wherein the at least one tertiary connecting rod (6):
- is individually and independently connected to the carrier frame (16) so as to be rotatable about a fourth connection (17), and
- is individually and independently rotatably connected to at least one, preferably two secondary connecting rods (5).

8. Mounting (1) according to one of Claims 6 or 7, wherein the tool frame (2, 18) in the transport position rests on at least one tertiary connecting rod (6).

9. Mounting (1) according to one of Claims 4, 6 or 8, wherein in the transport position, a movement damper damps the relative movement of at least two connecting rods of the linkage mechanism.

10. Mounting (1) according to any of the preceding claims, wherein the rotatable connection of the at least one stabilising element (10) to the primary (4) and/or secondary arms (5) coincides with the second connection (8).

11. Mounting (1) according to Claim 6 or 8, wherein at least three of the first (7), second (8), third (13) and fourth (17) connections are ball joints.

12. Mounting (1) according to claim 7, wherein the length of the two primary and two tertiary connecting rods (6) is substantially equal.

13. Agricultural tool provided with a mounting (1) according to any of the preceding claims, wherein the agricultural tool is removably coupled to the tool frame (2, 18).

14. Method for freely mounting an agricultural tool, comprising the steps of:
a) procuring a mounting (1) according to any of claims 1-12,
b) coupling the primary connecting rods (4) to a vehicle (3) or carrier frame (16) which is connected to a vehicle (3),
c) coupling the tool frame (2, 18) to the third connections (13) and to the at least one stabilising element (10).

## Patentansprüche

1. Aufhängung (1) für ein landwirtschaftliches Gerät, umfassend:
- einen Trägerrahmen (16), der mit Kupplungsmitteln zum Ankuppeln des Trägerrahmens (16) an ein Fahrzeug (3) versehen ist;
- einen Geräterahmen (2, 18);
- einen Lenkermechanismus, über den der Geräterahmen (2, 18) beweglich mit dem Trägerrahmen (16) verbunden ist, wobei der Lenkermechanismus versehen ist mit:
- mindestens zwei voneinander beabstandeten primären Lenkern (4), wobei die primären Lenker (4):
- jeweils einzeln und unabhängig mit dem Trägerrahmen (16) verbunden sind, so dass sie unabhängig um eine erste Verbindung (7) drehbar sind, und
- mindestens zwei sekundären Lenkern (5), wobei die sekundären Lenker (5):
- mittels einer dritten Verbindung (13), die in einem Abstand von der zweiten Verbindung (8) angeordnet ist, drehbar auf den Geräterahmen (2, 18) wirken, und
- mindestens einem Stabilisierungselement (10), das drehbar verbunden ist:
- mit den primären (4) und/oder sekundären (5) Lenkern, und
- mit einem Teil (12) des Geräterahmens (2, 18), der in einem Abstand von der dritten Verbindung (13) angeordnet ist,
**dadurch gekennzeichnet, dass**
die sekundären Lenker (5) jeweils einzeln und unabhängig mit den primären Lenkern (4) verbunden sind, so dass sie einzeln und wechselseitig unabhängig um eine zweite Verbindung (8) drehbar sind.

2. Aufhängung (1) nach Anspruch 1, wobei mindestens ein Stabilisierungselement (10) längenverstellbar ist, um einen Winkel (20) des Geräterahmens (2, 18) relativ zum Trägerrahmen (16) einzustellen.

3. Aufhängung (1) nach Anspruch 2, wobei die Länge des mindestens einen Stabilisierungselements (10) mittels eines verstellbaren Zylinders (10, 11) verstellbar ist.

4. Aufhängung (1) nach einem der Ansprüche 2 oder 3, wobei der Geräterahmen durch das mindestens eine Stabilisierungselement (10) versetzbar ist in:
- eine Arbeitsstellung, in welcher Stellung der Geräterahmen (2, 18) relativ zum Trägerrahmen (16) beweglich ist,
- eine Transportstellung, in welcher Stellung mindestens eine Drehung des Geräterahmens (2, 18) relativ zum Trägerrahmen (16) gehemmt ist.

5. Aufhängung (1) nach Anspruch 4, wobei die Länge des mindestens einen Stabilisierungselements (10, 11) in der Arbeitsstellung steuerbar ist, um einen im Wesentlichen konstanten Winkel (20) des Geräterahmens (2, 18) relativ zum Trägerrahmen (16) aufrechtzuerhalten.

6. Aufhängung (1) nach Anspruch 4, wobei in der Transportstellung ein Teil (19) des Geräterahmens (2, 18) auf mindestens einem der Lenker aufliegt, so dass eine Drehung des Geräterahmens (2, 18) gehemmt oder verhindert wird.

7. Aufhängung (1) nach einem der vorhergehenden Ansprüche, wobei der Lenkermechanismus ferner versehen ist mit:
- mindestens einem tertiären Lenker (6), wobei der mindestens eine tertiäre Lenker (6):
- einzeln und unabhängig mit dem Trägerrahmen (16) verbunden ist, so dass er um eine vierte Verbindung (17) drehbar ist, und
- einzeln und unabhängig drehbar mit mindestens einem, vorzugsweise zwei sekundären Lenkern (5) verbunden ist.

8. Aufhängung (1) nach einem der Ansprüche 6 oder 7, wobei der Geräterahmen (2, 18) in der Transportstellung auf mindestens einem tertiären Lenker (6) aufliegt.

9. Aufhängung (1) nach einem der Ansprüche 4, 6 oder 8, wobei in der Transportstellung ein Bewegungsdämpfer die Relativbewegung von mindestens zwei Lenkern des Lenkermechanismus dämpft.

10. Aufhängung (1) nach einem der vorhergehenden Ansprüche, wobei die drehbare Verbindung des mindestens einen Stabilisierungselements (10) mit den primären (4) und/oder sekundären Lenkern (5) mit der zweiten Verbindung (8) zusammenfällt.

11. Aufhängung (1) nach Anspruch 6 oder 8, wobei mindestens drei der ersten (7), zweiten (8), dritten (13) und vierten (17) Verbindungen Kugelgelenke sind.

12. Aufhängung (1) nach Anspruch 7, wobei die Länge der zwei primären und zwei tertiären Lenker (6) im Wesentlichen gleich ist.

13. Landwirtschaftliches Gerät, das mit einer Aufhängung (1) nach einem der vorhergehenden Ansprüche versehen ist, wobei das landwirtschaftliche Gerät lösbar mit dem Geräterahmen (2, 18) gekoppelt ist.

14. Verfahren zum freien Anbringen eines landwirtschaftlichen Geräts, umfassend die Schritte:
a) Bereitstellen einer Aufhängung (1) nach einem der Ansprüche 1 bis 12,
b) Ankoppeln der primären Lenker (4) an ein Fahrzeug (3) oder einen Trägerrahmen (16), der mit einem Fahrzeug (3) verbunden ist,
c) Ankoppeln des Geräterahmens (2, 18) an die dritten Verbindungen (13) und an das mindestens eine Stabilisierungselement (10).

## Revendications

1. Montage (1) pour un outil agricole, comprenant :
- un châssis porteur (16) muni de moyens d'accouplement pour accoupler le châssis
châssis (16) à un véhicule (3) ;
- un châssis d'outil (2, 18) ;
- un mécanisme d'articulation par l'intermédiaire duquel le châssis d'outil (2, 18) est relié de manière mobile au châssis porteur (16), ledit mécanisme d'articulation étant muni :
- d'au moins deux bielles primaires (4) espacées l'une de l'autre, les bielles primaires (4) :
- sont chacune reliées individuellement et indépendamment au châssis porteur (16) de manière à pouvoir tourner de façon indépendante autour d'une première liaison (7), et
- d'au moins deux bielles secondaires (5), les bielles secondaires (5) :
- agissent à rotation sur le châssis d'outil (2, 18) au moyen d'une troisième liaison (13) située à distance de la deuxième liaison (8), et
- d'au moins un élément stabilisateur (10) qui est relié à rotation :
- aux bielles primaires (4) et/ou secondaires (5), et
- à une partie (12) du châssis d'outil (2, 18) située à distance de la troisième liaison (13)
**caractérisé en ce que**
les bielles secondaires (5) sont chacune reliées individuellement et indépendamment aux bielles primaires (4) de manière à pouvoir tourner individuellement et mutuellement indépendamment autour d'une deuxième liaison (8).

2. Montage (1) selon la revendication 1, dans lequel au moins un élément stabilisateur (10) est réglable en longueur pour régler un angle (20) du châssis d'outil (2, 18) par rapport au châssis porteur (16).

3. Montage (1) selon la revendication 2, dans lequel la longueur de l'au moins un élément stabilisateur (10) est réglable au moyen d'un vérin réglable (10, 11).

4. Montage (1) selon l'une des revendications 2 ou 3, dans lequel le châssis d'outil peut être placé par l'au moins un élément stabilisateur (10) dans :
- une position de travail, dans laquelle position le châssis d'outil (2, 18) est mobile par rapport au châssis porteur (16),
- une position de transport, dans laquelle position au moins une rotation du châssis d'outil (2, 18) par rapport au châssis porteur (16) est entravée.

5. Montage (1) selon la revendication 4, dans lequel la longueur de l'au moins un élément stabilisateur (10, 11) dans la position de travail est apte à être commandée pour maintenir un angle (20) sensiblement constant du châssis d'outil (2, 18) par rapport au châssis porteur (16).

6. Montage (1) selon la revendication 4, dans lequel, dans la position de transport, une partie (19) du châssis d'outil (2, 18) repose sur au moins l'une des bielles de sorte qu'une rotation du châssis d'outil (2, 18) est entravée ou empêchée.

7. Montage (1) selon l'une quelconque des revendications précédentes, dans lequel le mécanisme d'articulation est également muni :
- d'au moins une bielle tertiaire (6), l'au moins une bielle tertiaire (6) :
- est reliée individuellement et indépendamment au châssis porteur (16) de manière à pouvoir tourner autour d'une quatrième liaison (17), et
- est reliée à rotation individuellement et indépendamment à au moins une, de préférence deux bielles secondaires (5).

8. Montage (1) selon l'une des revendications 6 ou 7, dans lequel le châssis d'outil (2, 18) dans la position de transport repose sur au moins une bielle tertiaire (6).

9. Montage (1) selon l'une des revendications 4, 6 ou 8, dans lequel, dans la position de transport, un amortisseur de mouvement amortit le mouvement relatif d'au moins deux bielles du mécanisme d'articulation.

10. Montage (1) selon l'une quelconque des revendications précédentes, dans lequel la liaison à rotation de l'au moins un élément stabilisateur (10) aux bielles primaires (4) et/ou secondaires (5) coïncide avec la deuxième liaison (8).

11. Montage (1) selon la revendication 6 ou 8, dans lequel au moins trois des première (7), deuxième (8), troisième (13) et quatrième (17) liaisons sont des rotules.

12. Montage (1) selon la revendication 7, dans lequel la longueur des deux bielles primaires et des deux bielles tertiaires (6) est sensiblement égale.

13. Outil agricole muni d'un montage (1) selon l'une quelconque des revendications précédentes, dans lequel l'outil agricole est accouplé de manière amovible au châssis d'outil (2, 18).

14. Procédé pour monter librement un outil agricole, comprenant les étapes consistant à :
a) se procurer un montage (1) selon l'une quelconque des revendications 1 à 12,
b) accoupler les bielles primaires (4) à un véhicule (3) ou à un châssis porteur (16) qui est relié à un véhicule (3),
c) accoupler le châssis d'outil (2, 18) aux troisièmes liaisons (13) et à l'au moins un élément stabilisateur (10).
